# EUROPÄISCHE PATENTSCHRIFT

(11) **EP 4 193 461 B1**
(45) Veröffentlichungstag und Bekanntmachung des Hinweises auf die Patenterteilung: **29.05.2024**
(21) Anmeldenummer: 21719543.7
(22) Anmeldetag: 29.03.2021
(51) Int. Cl.: H02S 20/23, F24S 20/67, F24S 25/30, F24S 25/61, F24S 25/63, F24S 25/65

(54) **DACHKONSTRUKTION ZUR BEFESTIGUNG VON AUFLAGEELEMENTEN**
ROOF STRUCTURE FOR SECURING SUPPORT ELEMENTS
STRUCTURE DE TOIT POUR LA FIXATION D'ÉLÉMENTS DE SUPPORT

(43) Veröffentlichungstag der Anmeldung: 14.06.2023
(73) Patentinhaber: AEROCOMPACT Group Holding AG, 1010 Wien (AT)
(72) Erfinder: GANAHL, Christian, 6822 Satteins (AT)
(74) Vertreter: Patent- und Rechtsanwälte Behrmann Wagner PartG mbB
(86) Internationale Anmeldenummer: PCT/EP2021/058183
(87) Internationale Veröffentlichungsnummer: WO 2022/207071

(56) Entgegenhaltungen:
- EP-A2- 2 775 232
- DE-A1-102010 016 676

## Beschreibung

Die vorliegende Erfindung betrifft eine Dachkonstruktion mit wenigstens einer Montageeinheit zur Befestigung von Auflageelementen, insbesondere Photovoltaik- oder Solarthermie-Paneelen, gemäß dem Oberbegriff des Anspruchs 1.

Aus dem Stand der Technik sind bereits verschiedene Dachkonstruktionen zur Befestigung von Auflageelementen, insbesondere Photovoltaik- oder Solarthermie-Paneelen, bekannt. Die Dachkonstruktionen müssen dabei verschiedenen Anforderungen gerecht werden. Sog- oder Zugkräfte, die auf die Auflageelemente wirken, müssen auf die Dacheindeckung und/ oder auf die darunter liegende Dachkonstruktion übertragen werden. Gleichermaßen ist, insbesondere in den Wintermonaten, der Eintrag von Druckkräften oder Querkräften in die Dacheindeckung und/oder die Dachunterkonstruktion zu berücksichtigen, die auftritt oder auftreten kann, wenn eine Schneelast auf den Auflageelementen, insbesondere Photovoltaik- oder Solarthermie-Paneelen, aufliegt und die entsprechende Gewichtskraft abgeleitet oder eingeleitet werden muss.

Diese Anforderungen müssen dabei für jede Form oder für jeden Typ von Dachkonstruktion abgestimmt oder optimiert werden. Weniger Probleme treten dabei im Bereich klassischer Dachkonstruktionen, beispielsweise mit hölzernen Firsten, Traufen, Pfetten und Sparren mit einer darüber liegenden Dacheindeckung in Form von Pfannen oder Ziegeln, beispielsweise aus mineralischem Material, auf.

Bei anderen Dachkonstruktionen entstehen größere Probleme bei der Einleitung oder Ableitung von Zug- und Druckkräften, insbesondere wenn die jeweilige Dachkonstruktion nur ein geringes oder begrenztes Maß an Punktlasten nicht überschreiten darf. Besonders Dacheindeckungen aus Verbundmaterial und/oder Blechprofil, insbesondere Sandwichelementen, beispielsweise unter Verwendung von Schaumstoffen und/oder Trapezblechprofile, mit entsprechenden Dachunterkonstruktionen aus Holz oder Metall erlauben im Vergleich zu anderen Dachkonstruktionen lokal nur verhältnismäßig geringe Punktlasten von in der Regel 1500 N bis 1800 N auf die Dacheindeckung.

Bei bekannten Montageeinheiten werden regelmäßig Verbindungselemente an der Dacheindeckung oder Dachunterkonstruktion punktuell befestigt, auf denen dann Montageschienen angeordnet werden, die dann wiederum genutzt werden, um die Auflageelemente, insbesondere Photovoltaik-Paneele, zu tragen oder zu halten. Diese Herangehensweise ist für die Dacheindeckung mit Verbundmaterialanordnungen und/oder Blechprofilen ungeeignet, da die zulässigen Lasten der Dacheindeckung an den Befestigungs- oder Anordnungspunkten der Verbindungselemente schnell überschritten sind oder überschritten werden und im Gegensatz zu anderen Dachkonstruktionen mit einer Eindeckung aus Pfannen oder Ziegeln kaum Möglichkeiten bestehen an der Dacheindeckung vorbei die Kräfte und Lasten in die Dachunterkonstruktion einzuleiten.

Aus dem Stand der Technik ist die DE 10 2010 016 676 A1 bekannt, die ein verschiebbares Stützelement für eine Dachkonstruktion offenbart.

Die EP 2 775 232 A2 lehrt zudem eine Befestigungsvorrichtung für die Befestigung einer Unterkonstruktion für die Aufnahme von Solarmodulen und -kollektoren.

Vor diesem Hintergrund stellt sich die vorliegende Erfindung die Aufgabe, eine Dachkonstruktion mit wenigstens einer Montageeinheit zur Befestigung von Auflageelementen, insbesondere Photovoltaik- oder Solarthermie-Paneelen, vorzuschlagen, die es erlaubt auf einer Dacheindeckung umfassend eine Verbundmaterialanordnung und/oder ein Blechprofil, insbesondere Sandwichelemente und/oder Trapezblechprofile einer entsprechenden Montageeinheit anzuordnen, ohne dabei die zulässigen Punktlasten, insbesondere der jeweiligen Dacheindeckung, zu überschreiten.

Gelöst wird diese Aufgabe mit einer Dachkonstruktion mit den Merkmalen des unabhängigen Anspruchs 1. Vorteilhafte Ausführungsformen sind Gegenstand der Unteransprüche, der nachfolgenden Beschreibung sowie der Figuren.

In einer an sich bekannten Art und Weise sind bei der Dachkonstruktion mit wenigstens einer Montageeinheit zur Befestigung von Auflageelementen, insbesondere Photovoltaik- oder Solarthermie-Paneelen, eine Dachunterkonstruktion, eine Dacheindeckung umfassend eine Verbundmaterialanordnung und/oder ein Blechprofil, insbesondere Sandwichelemente und/oder Trapezblechprofile, Verbindungselemente und wenigstens eine Montageschiene vorgesehen, wobei die Verbindungselemente zwischen der Dacheindeckung und der Montageschiene angeordnet sind und eine Beabstandung der Montageschiene gegenüber der Dacheindeckung bewirken.

Erfindungsgemäß ist jedoch in Weiterentwicklung zum Stand der Technik vorgesehen, dass wenigstens in Endabschnitten an beiden Enden einer Montageschiene Verbindungselemente angeordnet sind, die mit ersten Befestigungsmitteln befestigt sind, die eine Befestigung der Verbindungselemente an oder mit der Dachunterkonstruktion, insbesondere mit Dachpfetten der Dachunterkonstruktion, herstellen und dass zwischen den Verbindungselementen, die mit den ersten Befestigungsmitteln befestigt sind, entlang der Montageschiene wenigstens ein weiteres Verbindungselement angeordnet ist.

Die Erfindung beruht dementsprechend auf der Grundidee, dass Querkräfte und Lasten zumindest endseitig der Montageschiene gerade nicht in die Dacheindeckung sondern in die Dachunterkonstruktion abgeleitet werden, da diese in der Regel sehr viel stabiler ist und mehr Kräfte aufnehmen oder ableiten kann, als die Dacheindeckung. Bevorzugt sind dabei die ersten Befestigungsmittel so ausgestaltet, dass diese gerade nicht an der Dacheindeckung vorbei oder zwischen Elementen der Dacheindeckung vorbei sondern vielmehr direkt durch die Dacheindeckung hindurch von den Verbindungselementen bis in die Dachunterkonstruktion verlaufen.

Gleichermaßen liegt der Erfindung jedoch die überraschende Erkenntnis zugrunde, dass für Drucklasten oder Querkräfte auf die Dacheindeckung eine oder ggf. mehrere punktuelle Abstützungen oder Auflagen auf der Dacheindeckung wirkungsvoller und effektiver zur Begrenzung der punktuellen Querkräfte sind, als eine Strecken- oder Flächenauflage. Denn bisher wurde angenommen, dass bei Druckkräften, beispielsweise verursacht durch Schneelast, die dann über die Auflageelemente auf die Montageschiene übertragen werden, ein Verformen oder Durchbiegen der Montageschiene bis zu einem Punkt, an dem ein Teil oder ein Abschnitt der Montageschiene, bevorzugt zwischen zwei Verbindungselementen, auf der Dacheindeckung zur Anlage oder Auflage kommt und somit die Querkräfte auf die Dacheindeckung auf eine größere Fläche verteilt, günstiger ist, als eine gewollt und gezielt geschaffene punktuelle Einleitung von Kräften und Lasten, wie erfindungsgemäß vorgesehen über weitere Verbindungselemente zwischen endseitigen Verbindungselementen oder zwischen Verbindungselementen, die mit der Dachunterkonstruktion verbunden sind.

Die Erfindung hat also erkannt, dass einerseits höhere Lasten oder Querkräfte aufgenommen werden können, wenn diese direkt und unmittelbar in die Dachunterkonstruktion eingeleitet werden und zudem zwischen den Punkten, in denen eine Lasteinleitung in die Dachunterkonstruktion stattfindet, entgegen der ursprünglichen Erwartung oder in Abkehr von bisherigen Annahmen, eine zusätzliche stärker punktuelle Abstützung der Montageschiene gegenüber der Dacheindeckung über entsprechende Verbindungselemente realisiert wird und damit gerade eine flächige Anlage der Montageschiene auf der Dacheindeckung bei höheren Querlasten, insbesondere verursacht durch Schneelast, vermieden oder verhindert wird. Als stärker punktuelle Abstützungen können dabei Verbindungselemente verstanden werden, die im Vergleich zu einer durchgebogenen und auf der Dacheindeckung aufliegenden Montageschiene weniger als die Hälfte der Auflagestrecke oder Auflagefläche, bevorzugt weniger als ein Viertel der Auflagefläche oder Auflagestrecke, besonders bevorzugt weniger als ein Zehntel der Auflagefläche oder Auflagestrecke der gekrümmten, auf der Dacheindeckung aufliegenden Montageschiene bereitstellen.

Dabei steht die Vermutung im Raum, dass die zusätzlichen Verbindungselemente, die nicht mit der Dachunterkonstruktion verbunden sind und zwischen den Verbindungselementen angeordnet sind, die mit der Dachunterkonstruktion verbunden sind, die resultierende Steifheit oder Steifigkeit der Montageschiene erhöhen oder verbessern, sodass insgesamt mehr Querkräfte oder Druckkräfte durch eine Schneelast in die Montageschiene selbst eingeleitet werden und nicht auf die Dacheindeckung übertragen werden. Dies geschieht, da die Dacheindeckung im statischen Sinne als nicht steif anzusehen ist.

Gemäß einer ersten vorteilhaften Ausführungsform der Dachkonstruktion kann vorgesehen sein, dass das zwischen den Verbindungselementen, die mit den ersten Befestigungsmitteln an der Dachunterkonstruktion befestigt sind, angeordnete Verbindungselement mit zweiten Befestigungsmitteln befestigt ist, die eine Befestigung des Verbindungselements an oder mit der Dacheindeckung, insbesondere mit Sandwichelementen oder Trapezblechprofilen, herstellen.

Die ersten Befestigungsmittel können beispielsweise als Langschrauben ausgebildet sein, die sich ausgehend von dem Verbindungselement durch die gesamte Dacheindeckung bis in die Dachunterkonstruktion erstrecken. Auch andere Ausführungsformen der ersten Befestigungsmittel sind möglich. Die zweiten Befestigungsmittel können beispielsweise als Kurzschrauben ausgeführt sein, die sich von dem Verbindungselement lediglich bis in die Dacheindeckung erstrecken. Beispielsweise können Blechschrauben oder andere Verbindungsmittel vorgesehen sein.

Grundsätzlich kann jedoch auch die Befestigung an einer Dacheindeckung für die zwischengeordneten Verbindungselemente vollständig unterbleiben. Dann ist es besonders vorteilhaft, wenn wenigstens diese Verbindungselemente gegenüber den Montageschienen festgelegt oder befestigt sind, sodass diese auf der Dacheindeckung nicht verschoben, verrutscht oder bewegt werden können. Die zweiten Befestigungsmittel können Zugkräfte nur in äußerst geringem Maße übertragen. Jedoch haben sie sich, obwohl sie nur eine Verbindung des Verbindungselements zur Dacheindeckung herstellen, als besonders vorteilhaft erwiesen, um Querkräfte in Form von Drucklasten zu verringern oder deren Einleitung zu optimieren.

Besonders bevorzugt kann vorgesehen sein, dass die ersten und/oder zweiten Befestigungsmittel als zwei einzelne Befestigungselemente ausgebildet sind. Dies hat sich ebenfalls als besonders vorteilhaft im Hinblick auf die Entwicklung der jeweiligen Punktlasten ergeben.

Eine weitere, besonders bevorzugte Ausführungsform der Dachkonstruktion kann vorsehen, dass zusätzlich zu dem einen Verbindungselement, zwischen den Verbindungselementen, die mit ersten Befestigungsmitteln mit der Dachunterkonstruktion befestigt sind weitere, bevorzugt 2 × n mit n ≥ 1 Verbindungselemente angeordnet sind, wobei die weiteren Verbindungselemente, bevorzugt gleich verteilt oder gleichmäßig und damit paarweise in den Bereichen zwischen den Verbindungselementen, die mit ersten Befestigungsmitteln an der Dachunterkonstruktion befestigt sind und dem ersten dazwischenliegenden Verbindungselement, angeordnet sind. Die Anordnung weiterer Verbindungselemente kann in besonders vorteilhafter Weise gezielt die Durchbiegung der Montageschiene verhindern oder reduzieren und außerdem dazu führen, dass an keinem Punkt oder bei keinem Verbindungselement die zulässige maximale Querkraft überschritten wird, insbesondere im Hinblick auf Druckkräfte durch Schneelast. Die weiteren Verbindungselemente sind dabei bevorzugt ohne Verbindung zur Dacheindeckung oder mit einer Verbindung zur Dacheindeckung über zweite Befestigungsmittel ausgeführt. Die zweitgenannte Option entspricht damit dem ersten Verbindungselement, das zwischen den Verbindungselementen mit einer Verbindung an oder einer Befestigung an der Dachunterkonstruktion, angeordnet ist und ebenfalls mit zweiten Befestigungsmitteln an oder mit der Dacheindeckung verbunden ist.

Gemäß einer besonders bevorzugten Ausgestaltung kann vorgesehen sein, dass die zwischen den Verbindungselementen, die mit den ersten Befestigungsmitteln befestigt sind, angeordneten Verbindungelemente mit einem ersten Abstand zwischen einander angeordnet sind und die äußeren Verbindungselemente mit einem zweiten Abstand zu einem benachbarten Verbindungselement, das mit den ersten Befestigungsmitteln befestigt ist, angeordnet sind. Dies bedeutet, dass die zweiten Verbindungselemente oder die Verbindungselemente die ohne Verbindungsmittel oder mit zweiten Verbindungsmitteln gegenüber der Dacheindeckung angeordnet oder befestigt sind untereinander bevorzugt gleichmäßig oder zumindest gruppenweise gleichmäßig beabstandet sind und die jeweils äußeren Verbindungselemente einer Gruppe von Verbindungselementen, die ohne oder mit zweiten Befestigungsmitteln angeordnet oder befestigt sind, in einen bestimmten zweiten Abstand zu den Verbindungselementen angeordnet sind, die über die ersten Befestigungsmittel an der Dachunterkonstruktion befestigt oder angeordnet sind.

Dadurch wird erreicht, dass gerade in Bereichen der Montageschiene, die ansonsten zu einer starken Verformung oder Durchbiegung unter Drucckräften neigen würden bevorzugt mehrere Verbindungselemente ohne eine Verbindung oder Befestigung an der Dachunterkonstruktion vorgesehen werden können und in anderen Bereichen, die weniger zur Durchbiegung oder Verformung unter Schneelast neigen wenig oder gar keine Verbindungselemente vorgesehen werden. Dadurch wird in besonders vorteilhafter Weise eine flächige Anlage oder eine flächige Übertragung von Querkraft durch eine Vielzahl von einzelnen Lasteintragungspunkten ersetzt und gleichzeitig die Steifigkeit der Montageschiene erhöht, wodurch dann insgesamt die Lasteintragung oder der Eintrag von Querkräften in die Dacheindeckung verringert und insbesondere unterhalb eines zulässigen Grenzwertes verringert wird.

Gemäß einer weiteren, besonders vorteilhaften Ausgestaltung kann dabei vorgesehen sein, dass der erste Abstand kleiner als der zweite Abstand ist. Dies trägt insbesondere dem Umstand Rechnung, dass es Bereiche entlang der Montageschiene gibt, in denen eine Versteifung oder eine Verhinderung einer ansonsten stattfindenden Durchbiegung sowie einer Anlage zur Dacheindeckung besonders sinnvoll oder wünschenswert ist.

Gemäß einer weiteren, besonders vorteilhaften Ausgestaltung der Dachkonstruktion kann vorgesehen sein, dass zwischen den Endabschnitten wenigstens ein Verbindungselement angeordnet ist, das mit ersten Befestigungsmitteln befestigt ist, die eine Befestigung des Verbindungselements an oder mit der Dachunterkonstruktion, insbesondere mit Dachpfetten der Dachunterkonstruktion, herstellen. Mit anderen Worten ausgedrückt bedeutet dies, dass die Verbindungselemente, die mit der Dachunterkonstruktion verbunden oder an dieser befestigt sind nicht zwangsläufig auf die Endbereiche oder Endabschnitte der Montageschiene begrenzt sind, sondern darüber hinaus auch zwischen den Endabschnitten oder zwischen den besagten endseitigen Verbindungselementen angeordnet werden können. Der Ort und die Anzahl von weiteren Verbindungselementen, die mit ersten Befestigungsmitteln an oder mit der Dachunterkonstruktion verbunden oder befestigt sind, hängt einerseits von der Länge der eingesetzten Montageschiene, von den Flächenlasten der Auflageelemente andererseits aber auch von der jeweiligen Dachunterkonstruktion ab, da eine entsprechende Verbindung hergestellt werden muss. So kann beispielsweise bei der Verwendung von Langschrauben als erste Befestigungsmittel eine Anordnung der besagten Verbindungselemente nur oberhalb einer entsprechenden Dachunterkonstruktion, bevorzugt oberhalb entsprechender Pfetten, erfolgen. Weiter hängt die Notwendigkeit zur Verwendung weiterer Verbindungselemente mit Befestigungsmitteln zur Befestigung einer Dachunterkonstruktion auch von den ansonsten entstehenden Punktlasten und Querkräften ab.

Erfindungsgemäß ist zudem vorgesehen, dass die Montageschiene im montierten Zustand den Verbindungselementen zugewandte Kontaktmittel aufweist, die einen direkten Kontakt zwischen der Montageschiene und den ersten Befestigungsmitteln herstellen und eine Krafteinleitung, insbesondere eine Druckkrafteinleitung, in die ersten Befestigungsmittel ermöglichen. Durch die Kontaktmittel wird in besonders vorteilhafter Weise erreicht, dass ein möglichst großer Anteil der Druckkräfte oder Querlasten in die Dachunterkonstruktion eingeleitet wird und gerade nicht und nach Möglichkeit auch nicht teilweise über die Verbindungselemente selbst in die Dacheindeckung eingeleitet oder übertragen wird, da diese aus Belastungssicht die Schwachstelle oder das schwächste Glied der Dachkonstruktion darstellen.

Besonders bevorzugt kann weiter vorgesehen sein, dass die Montageschiene als Profilschiene ausgebildet ist und die Kontaktmittel als Kontaktsteg ausgebildet sind, wobei der Kontaktsteg bevorzugt ununterbrochen entlang der Kontaktschiene verläuft. Bei der Ausbildung der Montageschiene als Profilschiene können gegebenenfalls zusätzlich zu den Kontaktmitteln Führungsmittel vorgesehen sein, die eine Anlage und/oder Ausrichtung an und/oder gegenüber den Verbindungselementen ermöglichen und damit in vorteilhafter Weise auch die Ausrichtung und/oder Positionierung der Kontaktmittel gegenüber den Befestigungsmitteln ermöglichen, die ihrerseits wieder eine feste Positionierung gegenüber den Verbindungselementen aufweisen oder aufweisen können. In diesem Fall kann in besonders einfacher und zuverlässiger Weise sichergestellt werden, dass die Kontaktmittel direkt mit den ersten Befestigungsmitteln in Kontakt kommen und damit Kräfte, insbesondere Druckkräfte oder Querlasten, direkt über die ersten Befestigungsmittel in die Dachunterkonstruktion abgeleitet werden.

Gemäß einer weiteren, besonders vorteilhaften Ausführungsform kann, wie vorangehend bereits andiskutiert, vorgesehen sein, dass auch die Verbindungselemente als Profilelemente ausgebildet sind, wobei das Profil so ausgebildet ist, dass eine seitliche Führung der Montageschiene ermöglicht wird. Dies bedeutet mit anderen Worten ausgedrückt, dass bevorzugt Führungsmittel oder Führungselemente der Montageschiene mit Führungsmitteln oder Führungselementen der Profilelemente zusammenwirken, um eine seitliche Führung zu ermöglichen und bevorzugt gleichzeitig zu ermöglichen, dass die Kontaktmittel mit den ersten Befestigungsmitteln kontaktiert oder zur Anlage gebracht werden.

Weiterhin kann vorteilhaft vorgesehen sein, dass die ersten Befestigungsmittel so ausgestaltet sind, dass eine Befestigung an den Verbindungselementen, unabhängig von einer Vorspannung oder Verklemmung der Verbindungselemente an der Dacheindeckung, erreicht wird. Bei der Ausgestaltung der ersten Befestigungsmittel als Langschrauben kann dies beispielsweise durch ein Unterkopfgewinde realisiert werden, welches dann dafür sorgt, dass zusätzlich Druckkräfte oder Querlasten auf das Verbindungselement über die ersten Befestigungsmittel in die Dachunterkonstruktion eingeleitet werden können.

Gemäß einer weiteren, besonders bevorzugten Ausführungsform der vorgeschlagenen Dachkonstruktion kann vorgesehen sein, dass die Verbindungselemente entlang einer Hochsicke eines Trapezprofils der Dacheindeckung angeordnet sind. Dadurch kann vorteilhaft mit verhältnismäßig flachen Verbindungselementen gearbeitet werden und dennoch, insbesondere abseits der Hochsicke ein ausreichender Abstand zur Dacheindeckung erreicht werden.

Einzelne Ausführungsformen, Vorteile und Wirkungen der vorliegenden Erfindung werden nachfolgend mit Bezug zu den rein schematischen, beispielhaften Zeichnungen erläutert.

### Darin zeigen:

- Fig. 1a bis Fig. 1 c:: eine schematische Darstellung der statischen Verhältnisse im Stand der Technik sowie in der erfindungsgemäßen Verbesserung;
- Fig. 2:: eine schematische Darstellung eines Ausschnitts einer erfindungsgemäßen Dachkonstruktion;
- Fig. 3:: eine schematische Schnittdarstellung durch eine erfindungsgemäße Dachkonstruktion.

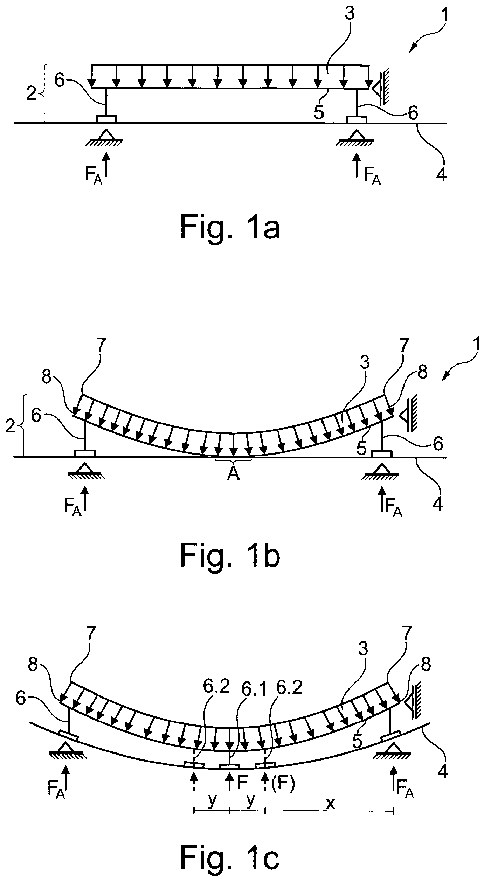

Die Fig. 1a bis 1c zeigen vereinfachte und beispielhafte Darstellungen einer Dachkonstruktion als statisches Einfeldträgersystem. Die Fig. 1a zeigt ein nicht von der Erfindung umfasstes System in einem unbelasteten Zustand. Die Eigenschaften und Wirkweisen lassen sich sowohl für erfindungsgemäße also auch für nicht von der Erfindung umfasste Systeme und Konstruktionen von einem Einfeldträgersystem auch auf Mehrfeldträgersysteme übertragen. Diese unterscheiden sich dann im Wesentlichen durch die Anzahl der Verbindungelemente, die mit der Dacheindeckung oder Dachunterkonstruktion verbunden sind. In den Beispielen der Fig. 1 sind lediglich endseitige Verbindungselemente mit der Dacheindeckung oder Dachunterkonstruktion verbunden.

Die Fig. 1a zeigt eine nicht erfindungsgemäße Dachkonstruktion 1 mit einer Montageeinheit 2 zur Befestigung von Auflageelementen 3, insbesondere Photovoltaik- oder Solarthermie-Paneelen. Die Dachkonstruktion 1 umfasst eine Dacheindeckung 4 sowie eine nicht näher oder nicht im Detail dargestellte Dachunterkonstruktion. Die Dacheindeckung 4 umfasst Verbundmaterialanordnungen und/oder ein Blechprofil.

Zur Anordnung einer Montageschiene 5 auf der Dachkonstruktion 1 sind Verbindungselemente 6 vorgesehen, die als Auflager fungieren. Die auf die Montageschiene 5 wirkende Flächenlast oder Summe aus Punktlasten, die als Pfeile in der Fig. 1 dargestellt sind, werden im Beispiel der Fig. 1a über die endseitigen oder in den Endabschnitten 7 der Montageschiene 5 angeordneten Verbindungselemente 6 abgeleitet. Zwischen der Montageschiene 5 und der Dacheindeckung 4 besteht ein definierter Abstand der als Funktion unter Berücksichtigung der Steifigkeit der Montageschiene 5 und der Flächenlast der Auflageelemente selbst zuzüglich möglicher Lasten, wie Schneelasten, auf die Montageschiene 5 berechnet wird.

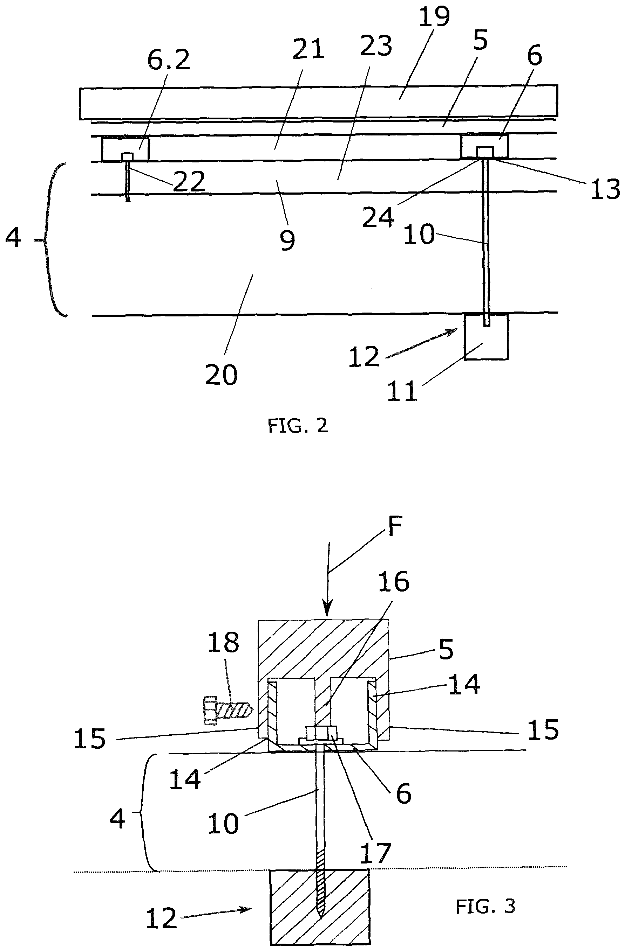

Ein erster Aspekt der Erfindung besteht darin, dass die Verbindungselemente 6 an beiden Enden der Montageschiene 5 mit ersten Befestigungsmitteln befestigt sind, die eine Befestigung der Verbindungselemente an oder mit der Dachunterkonstruktion, insbesondere mit Dachpfetten der Dachunterkonstruktion, herstellen. Bezüglich der Details wird auf die Fig. 2 und 3 verwiesen.

Die Fig. 1b zeigt eine resultierende Situation, die entsteht, wenn die Flächenlast oder die Summe der Punktlasten gegenüber der Darstellung der Fig.1a ansteigt oder vergrößert wird, beispielsweise durch eine Schneelast. Die Vergrößerung der Flächenlast an sich ist in der Fig. 1b nicht im Detail zeichnerisch dargestellt. Die Montageschiene 5 verbiegt sich und übernimmt die gesamte überlagerte Flächenlast bis zur Berührung der Dacheindeckung 4. Wenn die Flächenlast so groß wird, dass die Dacheindeckung 4 berührt wird, kommt es zu einer flächenmäßigen Lasteintragung in die Dacheindeckung 4.

Die Erfindung hat diesbezüglich erkannt, dass die in der Fig. 1b dargestellte Situation, selbst wenn die Flächenlast über einen größeren Abschnitt A oder über eine größere Fläche in die Dacheindeckung 4 eingeleitet wird, deutlich höhere punktuelle Querkräfte oder Lasteinträge in die Dacheindeckung 4 erzeugt, als unter Verwendung der erfindungsgemäßen zusätzlichen Verbindungselemente 6.1 und 6.2, wie in der Fig. 1c dargestellt.

In der Fig. 1c sind zusätzlich zu den in den Endabschnitten 7 an beiden Enden 8 der Montageschiene 5 angeordneten Verbindungselementen 6, die mit ersten Befestigungsmitteln an einer nicht dargestellten Dachunterkonstruktion befestigt sind weitere Verbindungselemente 6.1 sowie 6.2 angeordnet, die als Druckbefestiger fungieren und die Anlage der Montageschiene 5 an der Dacheindeckung 4 verhindern und gleichzeitig, obwohl die Fläche der Krafteintragung oder Kraftübertragung auf die Dacheindeckung 4 verringert wird, die Querkräfte im Bereich der Verbindungselemente 6.1 und 6.2 gegenüber einer flächigen Anlage verringern und somit dazu beitragen, dass die maximal zulässigen Punktlasten nicht überschritten werden.

In der Darstellung der Fig. 1c, die eine erfindungsgemäße Weiterentwicklung in einer ersten Ausführungsform darstellt, sind zusätzlich zu einem ersten zusätzlichen Druckbefestiger oder Verbindungselement 6.1 auch zwei weitere Verbindungselemente 6.2 oder Druckbefestiger vorgesehen. Dabei weisen die nicht mit der Dachunterkonstruktion verbundenen Druckbefestiger oder Verbindungselemente 6.1 und 6.2 untereinander einen ersten Abstand Y auf. Gegenüber den endseitigen Verbindungselementen 6 weisen der benachbarte Druckbefestiger oder Verbindungselemente 6.2 einen zweiten Abstand X auf. Der Abstand X ist dabei größer als der Abstand oder Zwischenabstand Y. Damit werden die Querkräfte optimal verteilt und eine Flächenanlage verhindert.

Die genauen Positionen der Verbindungselemente 6.1 und 6.2 und damit auch die Abstände X und Y sowie die Anzahl der Druckbefestiger oder Verbindungselemente 6.1, 6.2 können durch ein Optimierungsverfahren berechnet werden. Dabei werden berechnet oder berücksichtigt: Querkraft und Biegemoment der Montageschiene 5, Querkraft und Biegemomente der Dacheindeckung 4, Auflagerkraft an den endseitigen Verbindungselementen 6. Punktlast bei den zusätzlichen Verbindungselementen 6.1, 6.2.

Dadurch können die Bereiche, in denen es ohne die zusätzlichen Verbindungselemente 6.1, 6.2 oder Druckbefestiger zu einer Verbiegung der Trägerschiene 5 und damit zu einer Lastübertragung in die Dacheindeckung 4 kommen würde, bei einer steigenden Flächenlast die Lasteinträge auf die Dacheindeckung 4 in unerwarteter Weise verringert werden obwohl statt einer flächenmäßigen Lastübertragung eine stärker punktuelle Lastübertragung über die Verbindungselemente 6.1, 6.2 stattfindet.

Die Fig. 2 zeigt einen vergrößerten Ausschnitt aus einer erfindungsgemäßen Dachkonstruktion 1. Der Ausschnitt bezieht sich auf einen Endabschnitt 7 einer Montageschiene 5. Dabei ist zu erkennen, dass auf einer Hochsicke 9 einer Dacheindeckung 4 ein Verbindungselement 6 angeordnet ist, auf dem wiederum eine Montageschiene 5 aufgelegt oder angeordnet ist. Das Verbindungselement 6 ist über erste Befestigungsmittel 10 an einem Element der Dachunterkonstruktion 12, nämlich an einer Pfette 11 der Dachunterkonstruktion 12, befestigt. Dazu ist das erste Befestigungsmittel 10 als Langschraube ausgeführt, die sich durch die gesamte Dacheindeckung 4 erstreckt, die auch eine Verbundmaterialanordnung 20 umfasst und eine Befestigung oder Verankerung des Verbindungselements 6 an der Dachunterkonstruktion 12 ermöglicht.

Die ersten Befestigungsmittel 10 können zudem so ausgestaltet sein, dass eine Befestigung an den Verbindungselementen 6 unabhängig von einer Verspannung oder Verklemmung des Verbindungselements 6 an der Dacheindeckung 4 erreicht wird. Dies kann beispielsweise über ein Unterkopfgewinde 13 realisiert werden, welches in ein entsprechendes Gewinde 24 aufseiten des Verbindungselements 6 eingreift. Alternativ zur Darstellung der Fig. 2 können die Befestigungsmittel 10 auch zwei einzelne Befestigungselemente aufweisen, die dann bevorzugt hintereinander in Längsrichtung der Montageschiene 5 angeordnet sein können.

In der Fig. 2 ist weiterhin eine Verbindungselement 6.2 dargestellt, welches mit zweiten Befestigungsmitteln 22 lediglich in der Dacheindeckung 4 verankert oder befestigt ist. Das Verbindungselement wirkt damit als Druckaufleger und realisiert eine stärker punktuelle Lasteintragung gegenüber der Flächenanlage A der Fig. 1b. Durch die Verbindungselemente 6, 6.2 entsteht zwischen der Rückseite der Montageschiene 5 und der Hochsicke 9 ein Abstand 21, der auch zur Hinterlüftung der Auflageelemente 19, wie beispielsweise einem Photovoltaikpaneel dient. Der Abstand zwischen den Verbindungselementen 6 und 6.2 der Fig. 2 ist nicht zwingend maßstabsgetreu wiedergegeben.

In der Schnittdarstellung der Fig. 3 ist abermals ein Verbindungselement 6 dargestellt, welches auf einer Dacheindeckung 4 angeordnet ist und über erstes Befestigungsmittel 10 mit einer Dachunterkonstruktion 12 verbunden ist. Die Kraft F symbolisiert diejenige Kraft, mit der eine Flächenlast über die Montageschiene und die Gewichtskraft das Verbindungselement beaufschlagen. Das Verbindungselement 6 ist als Profilelement, beispielsweise als U-Profil ausgebildet und weist mit seinen seitlichen Profilschenkeln 14 eine seitliche Führung für die Montageschiene 5 auf. Die Montageschiene 5 ist ebenfalls als Profilschiene ausgebildet und weist Führungsschenkel 15 zur seitlichen Führung an dem Verbindungselement 6 auf. Über das Zusammenwirken der Schenkel 14, 15 wird zudem erreicht, dass die von der Montageschiene 5 umfassten dem Verbindungselement 6 zugewandten Kontaktmittel 16 in Form eines Kontaktstegs, der sich besonders bevorzugt ununterbrochen entlang der Kontaktschiene erstreckt, mit dem ersten Befestigungsmittel 10, insbesondere mit dem Schraubenkopf 17 des ersten Befestigungsmittels 10, direkt oder unmittelbar in Kontakt stehen, sodass über die Kontaktmittel 16 Druckkräfte, Flächenlast oder Querkräfte aus der Montageschiene 5 direkt in die ersten Befestigungsmittel 10 und darüber in die Dachunterkonstruktion 12 eingeleitet werden können. Optional können weitere Befestigungsmittel 18 vorgesehen sein, die die Montageschiene 5 mit dem Verbindungselement 6 verbinden und eine Übertragung von Zugkräften ermöglichen. Beispielsweise können die dritten Befestigungsmittel 18 seitlich in die Schenkel 14, 15 eingeschraubt werden, auch wenn dadurch die unmittelbare Kraftübertragung auf der Montageschiene 5 über die Kontaktmittel 16 in die ersten Befestigungsmittel 10 gegebenenfalls verringert oder limitiert wird.

### Bezugszeichen

- 1: Dachkonstruktion
- 2: Montageeinheit
- 4: Dacheindeckung
- 5: Montageschiene
- 6: Verbindungselemente / Auflager
- 6.1: Verbindungselemente / Druckbefestiger
- 6.2: Verbindungselemente / Druckbefestiger
- 7: Endabschnitte
- 8: Enden
- 9: Hochsicke
- 10: erstes Befestigungsmittel
- 11: Pfette
- 12: Dachunterkonstruktion
- 13: Unterkopfgewinde
- 14: seitliche Profilschenkel
- 15: Führungsschenkel
- 16: Kontaktmittel
- 17: Schraubenkopf
- 18: dritte Befestigungsmittel
- 19: Auflageelement
- 20: Verbundmaterialanordnung
- 21: zweite Befestigungsmittel
- 22: Abstand
- 23: Blechprofil
- 24: Gewinde

- F: Kraft
- Y: 1. Abstand
- X: 2. Abstand

## Patentansprüche

1. Dachkonstruktion (1) mit wenigstens einer Montageeinheit (2) zur Befestigung von Auflageelementen (19), insbesondere Photovoltaik- oder Solarthermie-Paneelen, mit einer Dachunterkonstruktion (12), einer Dacheindeckung (4) umfassend eine Verbundmaterialanordnung (20) und/oder ein Blechprofil 23, insbesondere Sandwichelemente und/oder Trapezblechprofile, sowie Verbindungselemente (6, 6.1, 6.2) und wenigstens eine Montageschiene (5), wobei die Verbindungselemente (6, 6.1, 6.2) zwischen der Dacheindeckung (4) und der Montageschiene (5) angeordnet sind und wenigstens in Endabschnitten (7) an beiden Enden (8) einer Montageschiene (5) Verbindungselemente (6) angeordnet sind, die mit ersten Befestigungsmitteln (10) befestigt sind, die eine Befestigung der Verbindungselemente (6) an oder mit der Dachunterkonstruktion (12), insbesondere mit Dachpfetten (11) der Dachunterkonstruktion (12), herstellen und dass zwischen den Verbindungselementen (6), die mit den ersten Befestigungsmitteln (10) befestigt sind, entlang der Montageschiene (5) wenigstens ein weiteres Verbindungselement (6.1, 6.2) angeordnet ist
**dadurch gekennzeichnet,**
**dass** die Montageschiene (5) im montierten Zustand den Verbindungselementen (6, 6.1, 6.2) zugewandte Kontaktmittel (16) aufweist, die einen direkten Kontakt zwischen der Montageschiene (5) und den ersten Befestigungsmitteln (10) herstellen und eine Krafteinleitung, insbesondere eine Druckkrafteinleitung, in die ersten Befestigungsmittel (10) ermöglichen.

2. Dachkonstruktion nach Anspruch 1,
**dadurch gekennzeichnet,**
**dass** das wenigstens eine, zwischen den Verbindungselementen (6), die mit den ersten Befestigungsmitteln (10) befestigt sind, angeordnete Verbindungselement (6.1, 6.2) mit zweiten Befestigungsmitteln befestigt ist, die eine Befestigung des Verbindungselements (6.1, 6.2) an oder mit der Dacheindeckung (4), insbesondere mit Sandwichelementen oder Trapezblechprofilen, herstellen.

3. Dachkonstruktion nach Anspruch 1 oder 2,
**dadurch gekennzeichnet,**
**dass** die ersten Befestigungsmittel (10) und/oder zweiten Befestigungsmittel zwei einzelne Befestigungselemente aufweisen.

4. Dachkonstruktion nach einem der Ansprüche 1 bis 3,
**dadurch gekennzeichnet,**
**dass** zusätzlich zu dem wenigstens einen Verbindungselement (6.1) zwischen den Verbindungselementen (6), die mit den ersten Befestigungsmitteln (10) befestigt sind, weitere, bevorzugt 2 × n mit n ≥ 1, Verbindungselemente (6.2) angeordnet sind.

5. Dachkonstruktion nach Anspruch 4,
**dadurch gekennzeichnet,**
**dass** die zwischen den Verbindungselementen (6), die mit den ersten Befestigungsmitteln (10) befestigt sind, angeordneten Verbindungselemente (6.1, 6.2) mit einem ersten Abstand (Y) zwischen einander angeordnet sind und mit einem zweiten Abstand (X) zu einem benachbarten Verbindungselement (6), das mit den ersten Befestigungsmitteln (10) befestigt, angeordnet sind.

6. Dachkonstruktion nach Anspruch 5,
**dadurch gekennzeichnet,**
**dass** der erste Abstand (Y) kleiner ist als der zweite Abstand (X).

7. Dachkonstruktion nach einem der Ansprüche 1 bis 6,
**dadurch gekennzeichnet,**
**dass** zwischen den Endabschnitten (7) wenigstens ein Verbindungselement (6) angeordnet ist, das mit ersten Befestigungsmitteln (10) befestigt ist, die eine Befestigung des Verbindungselements (6) an oder mit der Dachunterkonstruktion (12), insbesondere mit Dachpfetten (11) der Dachunterkonstruktion (12), herstellen.

8. Dachkonstruktion nach Anspruch 1,
**dadurch gekennzeichnet,**
**dass** die Montageschiene (5) als Profilschiene ausgebildet ist und die Kontaktmittel (16) als Kontaktsteg ausgebildet sind, wobei der Kontaktsteg, bevorzugt ununterbrochen, entlang der Kontaktschiene verläuft.

9. Dachkonstruktion nach einem der Ansprüche 1 bis 8,
**dadurch gekennzeichnet,**
**dass** die Verbindungselemente (6, 6.1, 6.2) als Profilelemente ausgebildet sind, wobei das Profil so ausgebildet ist, dass eine seitliche Führung der Montageschiene (5) ermöglicht wird.

10. Dachkonstruktion nach einem der Ansprüche 1 bis 9,
**dadurch gekennzeichnet,**
**dass** die ersten Befestigungsmittel (10) als Langschrauben mit einem Unterkopfgewinde (13) ausgestaltet sind, welches mit einem entsprechenden Gewinde (24) in den Verbindungselementen (6) eine Befestigung der Befestigungsmittel (10) an den Verbindungselementen (6), unabhängig von einer Verspannung oder Verklemmung mit den Verbindungselementen (6) erreicht wird.

11. Dachkonstruktion nach einem der Ansprüche 1 bis 10,
**dadurch gekennzeichnet,**
**dass** die Verbindungelemente (6, 6.1, 6.2) entlang einer Hochsicke (9) eines Trapezprofils der Dacheindeckung (4) angeordnet sind.

## Claims

1. A roof structure (1) comprising at least one mounting unit (2) for securing fitting elements (19), in particular photovoltaic or solar-heat panels, a roof substructure (12), a roof covering (4) comprising a composite material assembly (20) and/or a sheet profile (23), in particular sandwich elements and/or trapezoidal sheet profiles, connecting elements (6, 6.1, 6.2), and at least one mounting rail (5), the connecting elements (6, 6.1, 6.2) being disposed between the roof covering (4) and the mounting rail (5), and connecting elements (6) being disposed on both ends (8) of one mounting rail (5) at least in end portions (7), the connecting elements (6) being secured with first securing means (10) which secure the connecting elements (6) to or with the roof substructure (12), in particular with roof purlins (11) of the roof substructure (12), and at least one additional connecting element (6.1, 6.2) being disposed along the mounting rail (5) between the connecting elements (6) secured with the first securing means (10),
**characterized in that**
the mounting rail (5) has contact means (16) facing the connecting elements (6, 6.1, 6.2) in the mounted state, the contact means (16) establishing direct contact between the mounting rail (5) and the first securing means (10) and enabling an introduction of force, in particular an introduction of pressure force, into the first securing means (10).

2. The roof structure according to claim 1,
**characterized in that**
the at least one connecting element (6.1, 6.2) disposed between the connecting elements (6) secured with the first securing means (10) is secured with second securing means, which secure the connecting element (6.1, 6.2) to or with the roof covering (4), in particular with sandwich elements or trapezoidal sheet profiles.

3. The roof structure according to claim 1 or 2,
**characterized in that**
the first securing means (10) and/or the second securing means comprise two individual securing elements.

4. The roof structure according to any one of claims 1 to 3,
**characterized in that**
in addition to the at least one connecting element (6.1), additional connecting elements (6.2), preferably 2 × n, with n ≥ 1, are disposed between the connecting elements (6) secured with the first securing means (10).

5. The roof structure according to claim 4,
**characterized in that**
the connecting elements (6.1, 6.2) disposed between the connecting elements (6) secured with the first securing means (10) are disposed at a first distance (Y) from each other and at a second distance (X) from an adjacent connecting element (6) secured with the first securing means (10).

6. The roof structure according to claim 5,
**characterized in that**
the first distance (Y) is smaller than the second distance (X).

7. The roof structure according to any one of claims 1 to 6,
**characterized in that**
at least one connecting element (6) secured with the first securing means (10) securing the connecting element (6) to or with the roof substructure (12), in particular with roof purlins (11) of the roof substructure (12), is disposed between the end portions (7).

8. The roof structure according to claim 1,
**characterized in that**
the mounting rail (5) is a profile rail, and the contact means (16) are a contact web, the contact web preferably continuously running along the contact rail.

9. The roof structure according to any one of claims 1 to 8,
**characterized in that**
the connecting elements (6, 6.1, 6.2) are profile elements, the profile being configured in such a manner that it enables lateral guiding of the contact rail (5).

10. The roof structure according to any one of claims 1 to 9,
**characterized in that**
the first securing means (10) are long screws having an underhead thread (13) securing the securing means (10) to the connecting elements (6) together with a mating thread (24) in the connecting elements (6) irrespective of a clamping to the connecting elements (6).

11. The roof structure according to any one of claims 1 to 10,
**characterized in that**
the connecting elements (6, 6.1, 6.2) are disposed along a raised bead (9) of a trapezoidal sheet profile of the roof covering (4).

## Revendications

1. Structure de toit (1) comprenant au moins une unité de montage (2) destinée à fixer des éléments d'appui (19), notamment des panneaux photovoltaïques ou solaires thermiques, une sous-structure de toit (12), une couverture de toit (4) comprenant un ensemble de matériau composite (20) et/ou un profilé en tôle (23), notamment des éléments sandwich et/ou des profilés trapézoïdaux en tôle, des éléments de liaison (6, 6.1, 6.2) et au moins un rail de montage (5), les éléments de liaison (6, 6.1, 6.2) étant disposés entre la couverture de toit (4) et le rail de montage (5) et des éléments de liaison (6) étant disposés aux deux extrémités (8) d'un rail de montage (5) au moins dans des parties d'extrémité (7), les éléments de liaison (6) étant fixés avec des premiers moyens de fixation (10) qui fixent les éléments de liaison (6) au ou avec la sous-structure de toit (12), notamment avec des pannes de toit (11) de la sous-structure de toit (12), et au moins un élément de liaison (6.1, 6.2) additionnel étant disposé le long du rail de montage (5) entre les éléments de liaison (6) fixés avec les premiers moyens de fixation (10),
**caractérisée en ce que**
le rail de montage (5) a des moyens de contact (16) tournés vers les éléments de liaison (6, 6.1, 6.2) dans l'état monté, les moyens de contact (16) établissant un contact direct entre le rail de montage (5) et les premiers moyens de fixation (10) et permettant l'introduction de force, notamment d'une force de pression, dans les premiers moyens de fixation (10).

2. Structure de toit selon la revendication 1,
**caractérisée en ce que**
l'au moins un élément de liaison (6.1, 6.2) disposé entre les éléments de liaison (6) fixés avec les premiers moyens de fixation (10) est fixé avec des deuxièmes moyens de fixation, qui fixent l'élément de liaison (6.1, 6.2) à ou avec la couverture de toit (4), notamment avec des éléments sandwich ou des profilés trapézoïdaux en tôle.

3. Structure de toit selon la revendication 1 ou 2,
**caractérisée en ce que**
les premiers moyens de fixation (10) et/ou les deuxièmes moyens de fixation comprennent deux éléments de fixation individuels.

4. Structure de toit selon l'une quelconque des revendications 1 à 3, **caractérisée en ce**
**qu'**en plus de l'au moins un élément de liaison (6.1), des éléments de liaison (6.2) supplémentaires, de préférence 2×n, où n ≥ 1, sont disposés entre les éléments de liaison (6) fixés avec les premiers moyens de fixation (10).

5. Structure de toit selon la revendication 4,
**caractérisée en ce que**
les éléments de liaison (6.1, 6.2) disposés entre les éléments de liaison (6) fixés avec les premiers moyens de fixation (10) sont disposés à une première distance (Y) l'un de l'autre et à une deuxième distance (X) d'un élément de liaison (6) adjacent fixé avec les premiers moyens de fixation (10).

6. Structure de toit selon la revendication 5,
**caractérisée en ce que**
la première distance (Y) est inférieure à la deuxième distance (X).

7. Structure de toit selon l'une quelconque des revendications 1 à 6, **caractérisée en ce**
**qu'**au moins un élément de liaison (6) fixé avec les premiers moyens de fixation (10) fixant l'élément de liaison (6) à ou avec la sous-structure de toit (12), notamment avec des pannes de toit (11) de la sous-structure de toit (12), est disposé entre les parties d'extrémité (7).

8. Structure de toit selon la revendication 1,
**caractérisée en ce que**
le rail de montage (5) est un rail profilé et les moyens de contact (16) sont une âme de contact, l'âme de contact s'étendant, de préférence continument, le long du rail de contact.

9. Structure de toit selon l'une quelconque des revendications 1 à 8, **caractérisée en ce que**
les éléments de liaison (6, 6.1, 6.2) sont des éléments profilés, le profilé étant configuré de telle manière qu'il permet un guidage latéral du rail de contact (5).

10. Structure de toit selon l'une quelconque des revendications 1 à 9, **caractérisée en ce que**
les premiers moyens de fixation (10) sont des vis longues à filetage sous-tête (13) fixant les moyens de fixation (10) aux éléments de liaison (6) avec un filetage (24) correspondant dans les éléments de liaison (6) indépendamment d'une serrage aux éléments de liaison (6).

11. Structure de toit selon l'une quelconque des revendications 1 à 10, **caractérisée en ce que**
les éléments de liaison (6, 6.1, 6.2) sont disposés le long d'une nervure (9) d'un profilé trapézoïdal de la couverture de toit (4).
